# EUROPEAN PATENT APPLICATION

(11) **EP 2 946 949 A1**
(43) Date of publication of application: **25.11.2015**
(21) Application number: 15156619.7
(22) Date of filing: 25.02.2015
(51) Int. Cl.: B60D 1/14, B60D 1/46, B62D 49/06, A01B 59/06

(54) **LINKAGE ATTACHMENT SUPPORT**

(30) Priority: 12.05.2014 GB 201408382
(71) Applicant: AGCO International GmbH, 8212 Neuhausen am Rheinfall (CH)
(72) Inventor: Stich, Ulrich, 87616 Marktoberdorf (DE)
(74) Representative: AGCO Intellectual Property Department

(57) **Abstract**

A linkage attachment arrangement on a vehicle. The linkage attachment arrangement comprises two attachment plates in a spaced arrangement for attachment to a link of a linkage therebetween. The attachment plates are provided with bolt holes for receiving a removeable pin to connect a bore of the linkage to the attachment plates. An inward facing side of each attachment plate is provided with a respective support plate comprising curved contours which align with the bolt holes so that when the position of the link within the attachment plates is changed, the connecting end of the link is rested in the relevant curved contours and the bore is centred with the bolt holes for easy insertion of the pin.

## Description

This invention relates to a linkage attachment arrangement for attaching a linkage system to a vehicle. More specifically, the invention relates to a linkage attachment support having a centring means to facilitate a change of position of a top link on an agricultural tractor.

It is known to attach linkage systems comprising two lower links and a top link to the rear of a tractor for connection to an implement. The top link is pivotally mounted to the rear of the transmission housing of the tractor for movement about a substantially horizontal axis. The top link is adjustable in length as well as position. By position, it is meant the height of the end of the top link which is pivotally attached to the tractor relative to the ground.

The rear of the transmission housing may be provided with a mounting device having two mounting plates each having at least two bolt holes for attaching a top link to the tractor. The pairs of bolt holes are arranged at different heights relative to the ground to enable the operator to attach the top link between the plates at different positions. A pivot pin extends through one pair of bolt holes and a bore in the top link to attach the upper link to the mounting plate at the desired position. In order to change the position of the top link, a person must hold the bore of the top link in alignment with the desired pair of bolt holes and insert a bolt through the bolt holes and bore. This is difficult to do, since one hand is used to guide the top link into position and to support the weight of the link, whilst the other hand is used to insert the bolt. The danger is that the heavy top link is dropped causing injury to the operator, or damage to other objects around the rear of the tractor.

An aim of the invention is to provide a linkage attachment support for attaching a linkage system to a vehicle which aligns the bore of the linkage with the bolt holes and thus facilitates a change of position of the top link while also increasing safety during the change. It is a further aim of the invention to provide a linkage attachment support which can be simply retrofitted to an existing link holder mounted on a tractor.

The invention also supports some of the weight of the linkage during a change of position thus reducing the danger of a dropped linkage.

According to the invention, there is provided a linkage attachment arrangement on a vehicle, said linkage attachment arrangement comprising two attachment plates in a spaced arrangement for attachment to a link of a linkage therebetween, said attachment plates provided with bolt holes for receiving a removeable pin to connect a bore of the linkage to the plates, characterised in that an inward facing side of each attachment plate is provided with a respective support plate comprising curved contours which align with the bolt holes so that when the position of the link within the attachment plates is changed, the connecting end of the link is rested in the curved contours and the bore is centred with the bolt holes for easy insertion of the pin.

The arrangement allows the operator to rest one end of the link in the contours to bear some of the weight of the link whilst also aligining the bore of the link with the bolt holes. In this position only one hand of the operator is needed to support the link. The other hand is then free to insert the pin to secure the link in the new position. The arrangement thus provides a safe means of re-positioning a top link within the attachment.

Preferably, the link is provided with a protrusion which engages with the curved contour of both support plates and holds the bore in alignment with the bolt holes. T Preferably, the link comprises a joint to allow horizontal movement of the link when attached, said joint being provided with the protrusion.

The protrusion is preferably an extension of the bore.

Each support plate preferably comprises three curved contours.

Preferably, the curved contours are open circular holes.

More preferably, the curved contours have a larger diameter than the bolt holes.

The curved contours are preferably open in a direction facing the rear of the vehicle.

The invention will now be described, by way of example only, with reference to the following drawings, in which:
Figure 1 is a perspective view of a top link attached to a mounting plate having a linkage attachment support in accordance with the invention,
Figure 2 is a perspective view along line X-X of figure 1,
Figure 3 is a further perspective view along line X-X of figure 1, and
Figure 4 is yet a further perspective view of figure 1.

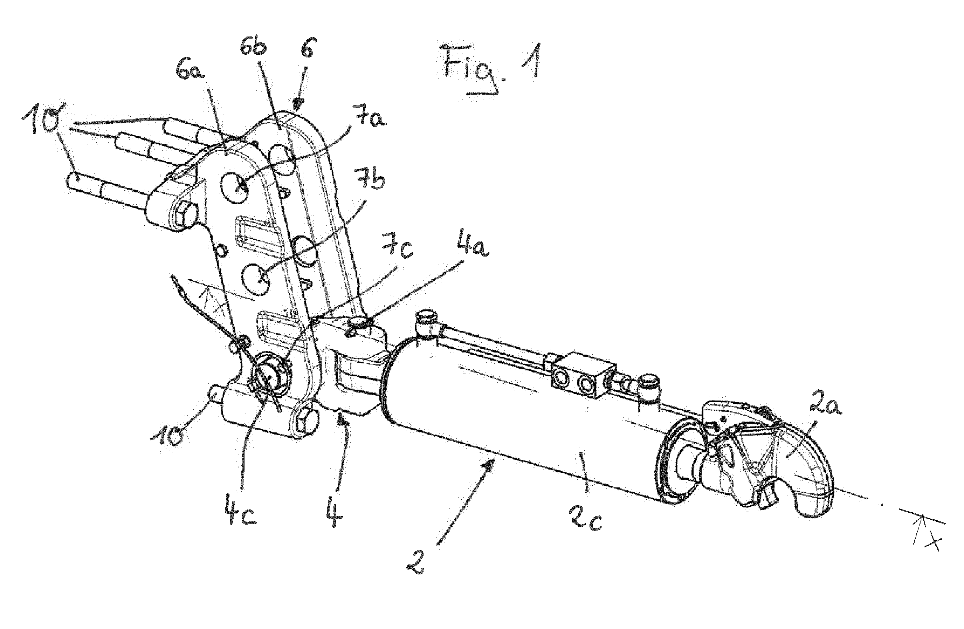

Figure 1 is a perspective view of a top link 2 attached to a mounting device 6. Such a link may be part of a linkage found at the rear of an agricultural tractor. The linkage may be a three point linkage arrangement further comprising two lower links (not shown). With a three point linkage, the top link is attached to the tractor above and between the two link links. The mounting device 6 is attached to the transmission housing of the tractor (not shown) by screws 10.

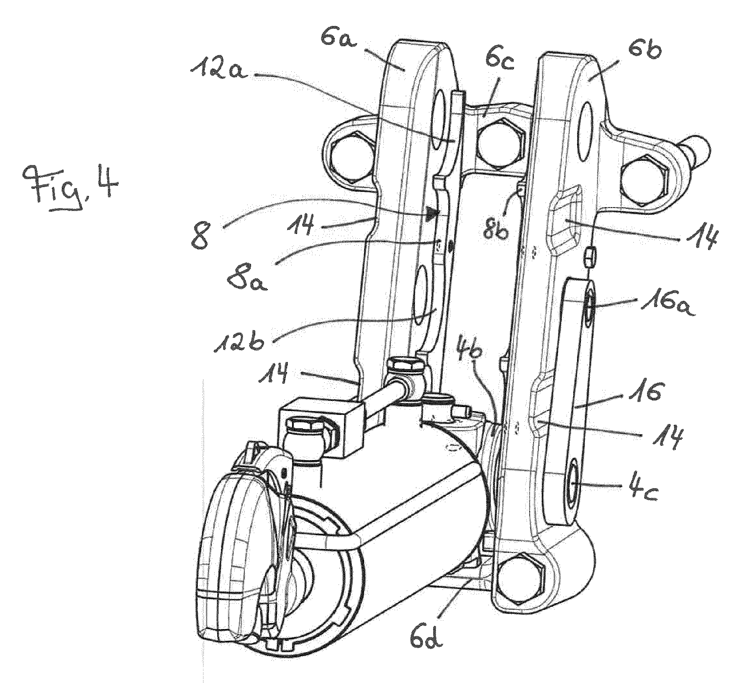

The mounting device 6 comprises two attachment plates 6a, 6b which each comprise three bolt holes 7a, 7b, 7c, a top part 6c and a bottom part 6d (see figure 4). The attachment plates 6a, 6b are arranged facing each other in a spaced apart symmetrical arrangement so that a pivot joint 4 of the top link can be fitted between them.

The bolt holes 7a, 7b and 7c are arranged in a substantially vertical manner with respect to each other and thus provide a range of different heights above the ground to which the top link can be attached. In figure 1, the top link 2 is shown attached to bolt holes 7c in the lowest position. The top link 2 comprises a main body 2c, a hook 2a and the pivot joint 4. One end of the main body 2c is provided with the hook 2a and the other end is connected to the pivot joint 4 by pivot bolt 4a which permits horizontal movement of the main body 2c about a substantially vertical axis. The pivot joint 4 is further provided with a bore 2d which extends through the joint perpendicular to pivot bolt 4a. The circumference of the bore 2d on each side of the joint 4 is provided with a protrusion which extends away from the joint 4 in the direction of the longitudinal axis of the bore 2d to provide a short extended cylindrical lip 4b (see Fig. 4) on either side of the joint 4. The bore 2d of the joint 4 must be aligned between a pair of bolt holes 7a, 7b, 7c of plates 6a, 6b to allow a pivot pin 4c to be inserted through the bolt holes and the bore 2d. The pin 4c when secured through a pair of bolt holes and the bore lies in a substantially horizontal plane so that the joint 4 and therefore top link 2 can pivot about a substantially horizontal axis between plates 6a, 6b which allows vertical movement.

The inside face of each attachment plate 6a, 6b is further provided with a linkage attachment support 8 which comprises two support plates 8a, 8ab. Each support plate is provided with three curved contours 12a, 12b, 12c which are arranged in a substantially vertical manner. The curved contours 12a, 12b, 12c are wider in diameter than bolt holes 7a, 7b and 7c and are of a circular form having a missing circumference portion so that they are open in the direction facing the top link 2. When support plates 8a, 8b are fitted, the centre of curved contours 12a, 12b and 12c are in alignment with the centre of bolt holes 7a, 7b, 7c. Support plates 8a, 8b are secured respectively to plates 6a, 6b by screws 9a. The cylindrical lip 4b on either side of the joint 4 is needed to allow joint 4 to move vertically without coming in contact and thus damage the linkage attachment support 8.

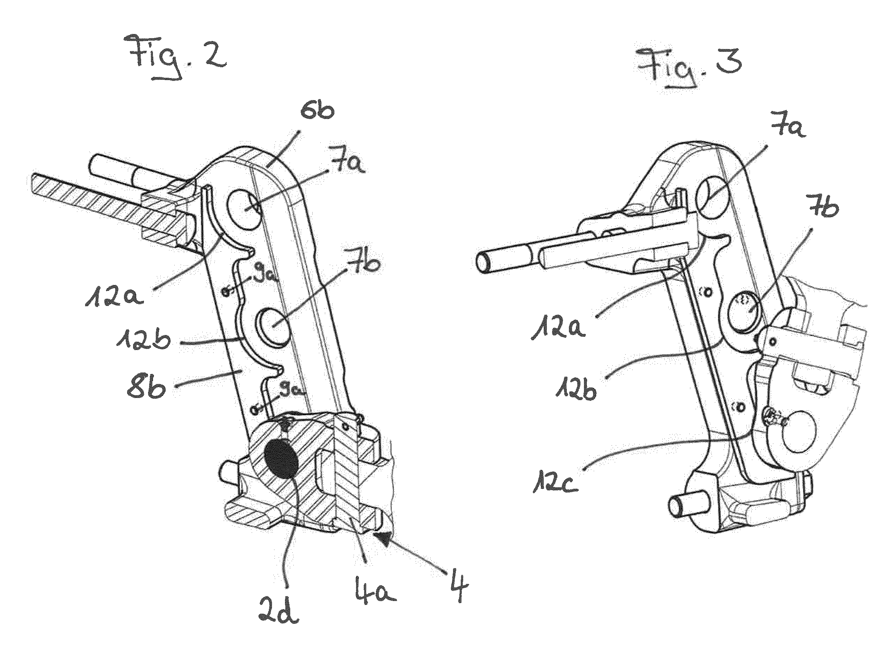

In figures 2 and 3, one plate 6a and its support plate 8a have been removed, so that the inside face of plate 6b and support plate 8b can be seen more easily.

Figure 4 is yet a further perspective view of the arrangement shown in figure 1 from the rear of the tractor. Rigid strap 16 is shown on the exterior of plate 6b to and assists the removal of the pin 4c. One end of the strap 16 is connected to the pin 4c by welding for example. The other end of the strap is detachably connectable to one of the bolt holes 7a-7c by a removable pin 16a to prevent movement of the strap. The pin 16a is used to connect the strap 16 to one of the bolt holes either above or below the bolt hole to which pin 4c is inserted. At least one indentation 14 is also provided on the surface of the exterior of one of the plates 6a or 6b to which strap 16 is attachable. It is possible that both plates 6a, 6b are provided with indentations. The indentation 14 allows a tool to be used to disconnect the strap and therefore pin 4c from the arrangement.

To change the position of the top link 2 from one set of bolt holes to another, the top link 2 is held by the operator in one hand and the pin 4c is removed from the bolt holes 7a, 7b or 7c and bore with the other hand. The removal of the pin 4c can be achieved by introducing a tool into the indentation 14 and pushing against the strap 16 away from the link. This thus pulls attached pin 4c away out of bore 2d. The top link 2 can then be moved with one or two hands into the curved contours 12a, 12b or 12c associated with the desired bolt hole, so that the protruding lip 4b of the bore rests and is supported in the curved contour. Since each curved contour is aligned with corresponding bolt holes, the placing of the lip 4b of the bore in the curved contours centres the bore with the bolt holes which means the operator does not have to centre it himself whilst supporting the weight of the link 2. With the joint 4 resting in the curved contours, the operator can then easily insert the pivot pin 4c through the bolt hole of each plate 6a, 6b and through the bore.

## Claims

1. A linkage attachment arrangement on a vehicle, said linkage attachment arrangement comprising two attachment plates in a spaced arrangement for attachment to a link of a linkage therebetween, said attachment plates provided with bolt holes for receiving a removeable pin to connect a bore of the linkage to the attachment plates, **characterised in that** an inward facing side of each attachment plate is provided with a respective support plate comprising curved contours which align with the bolt holes so that when the position of the link within the attachment plates is changed, the connecting end of the link is rested in the relevant curved contours and the bore is centred with the bolt holes for easy insertion of the pin.

2. A linkage attachment arrangement as claimed in claim 1 wherein the link is provided with a protrusion which engages with the curved contour of both support plates and holds the bore in alignment with the bolt holes.

3. A linkage attachment arrangement as claimed in any preceding claim wherein the link comprises a joint to allow horizontal movement of the link when attached, said joint being provided with the protrusion.

4. A linkage attachment arrangement as claimed in claim 2 or claim 3 wherein the protrusion is an extension of the bore.

5. A linkage attachment arrangement as claimed in any preceding claim wherein each support plate comprises three curved contours.

6. A linkage attachment arrangement as claimed in any preceding claim wherein the curved contours are open circular holes.

7. A linkage attachment arrangement as claimed in claim 5 wherein the curved contours have a larger diameter than the bolt holes.

8. A linkage attachment arrangement as claimed in claim 5 or claim 6 wherein the curved contours are open in the direction facing the rear of the vehicle.
